# EUROPÄISCHE PATENTANMELDUNG

(11) **EP 0 830 886 A1**
(43) Veröffentlichungstag der Anmeldung: **25.03.1998**
(21) Anmeldenummer: 97116120.3
(22) Anmeldetag: 13.09.1997
(51) Int. Cl.: B01D 39/20, B01D 29/03, B01D 29/56, B01D 29/58, B01D 46/12

(54) **Filtermaterial sowie Filter zum Filtrieren von Flüssigkeiten oder Gasen**

(30) Priorität: 20.09.1996 DE 29616385 U
(71) Anmelder: Luhr, Johannes, 79292 Pfaffenweiler (DE); Ruh, Wolfgang, 79238 Ehrenkrichen (DE)
(72) Erfinder: Luhr, Johannes, 79292 Pfaffenweiler (DE); Ruh, Wolfgang, 79238 Ehrenkrichen (DE)
(74) Vertreter: Goy, Wolfgang, Dipl.-Phys.

(57) **Zusammenfassung**

Die Erfindung betrifft ein Filtermaterial zum Filtern von Flüssigkeiten oder Gasen. Das Filtermaterial besteht aus einem körnigen Material (Splitt, Quarz, Sand), welches durch einen Verbundstoff in Form eines Klebstoffes (vorzugsweise Epoxyharz) zu einer festen Einheit unter Ausbildung von Filterporen verbunden ist. Dabei können in einem Gehäuse (1) mehrere Filterplatten (5) hintereinander angeordnet sein, wobei in Strömungsrichtung gesehen sich die Körnung des körnigen Materials von Filterplatte (5) zu Filterplatte (5) verringert.

## Beschreibung

Die Erfindung betrifft ein Filtermaterial zum Filtern von Flüssigkeiten oder Gasen. - Die Erfindung betrifft ferner einen Filter zum Filtrieren von Flüssigkeiten oder Gasen unter Verwendung des Filtermaterials.

Zum Filtrieren von Flüssigkeiten oder Gasen in entsprechenden Filtern werden Filtermaterialien benötigt. Dabei wird die Flüssigkeit oder das Gas durch das Filtermaterial hindurchgeleitet, wobei die auszufilternden Stoffe durch das Filtermaterial zurückgehalten werden.

Der Erfindung liegt die **Aufgabe** zugrunde, ein neuartiges Filtermaterial zum Filtrieren von Flüssigkeiten oder Gasen zu schaffen, welches einerseits einfach und kostengünstig in der Herstellung und andererseits sehr wirkungsvoll die an das Filtermaterial gestellten Filteraufgaben erfüllt; weiterhin soll ein technisch einfacher Filter zum Filtrieren von Flüssigkeiten oder Gasen unter Verwendung eines derartigen Filtermaterials geschaffen werden.

Als technische **Lösung** wird hinsichtlich des Filtermaterials ein körniges Material vorgeschlagen, welches durch einen Verbundstoff zu einer festen Einheit unter Ausbildung von Filterporen verbunden ist.

Die Grundidee des erfindungsgemäßen Filtermaterials liegt in der Verwendung von einem körnigen Material, welches zu einer festen, kompakten Einheit verbunden ist. Da die einzelnen Materialteilchen des körnigen Materials in der Regel ganz unterschiedlich geformt sind, können die Materialteilchen zwar aneinanderliegen, doch besteht immer ein Zwischenabstand zwischen ihnen, so daß zwar eine feste Einheit aus dem körnigen Material gebildet ist, diese jedoch porös und durchlässig ist, so daß die zu filtrierende Flüssigkeit oder das zu filtrierende Gas hindurchfließen kann und die auszufilternden Stoffe durch die Filterporen zurückgehalten werden. Um den festen Verbund des körnigen Materials zu realisieren, ist dieses mittels eines Verbundstoffes zu einer festen Einheit verbunden. In der Praxis sieht dies so aus, daß das körnige Material zusammen mit dem Verbundstoff vermischt in eine Form gegeben und dort gepreßt wird. Nach dem Aushärten des Verbundstoffes entsteht dann die feste Einheit und kann der Preß- und Aushärteform entnommen werden.

Das körnige Material besteht vorzugsweise aus Splitt und/oder Quarz und/oder Sand. Selbstverständlich sind auch noch andere Materialien denkbar. Der Splitt zeichnet sich dadurch aus, daß er relativ eckig ist und plane Flächen aufweist mit dem Effekt, daß einander benachbarte Splittkörnchen mit ihren ebenen Flächen aneinandertiegen können und somit die Durchlässigkeit nicht so groß ist. Der Quarz hingegen besteht aus relativ runden Körnern, welche allenfalls punktuell aneinandertiegen können, so daß hier eine etwas größere Durchlässigkeit gegeben ist.

Als Verbundstof ist vorzugsweise ein Klebstoff, insbesondere Epoxidharz mit Härter, vorgesehen. Das Epoxidharz stellt eine einfache Möglichkeit dar, um das körnige Material zu einer festen Einheit zu verbinden und dabei gleichzeitig Filterporen zwischen den Körnern zu schaffen. Selbstverständlich sind auch andere Verbundstoffe, insbesondere andere Klebestoffe denkbar.

Zur Schaffung eines Filters zum Filtrieren von Flüssigkeiten oder Gasen unter Verwendung des zuvor beschriebenen Filtermaterials wird als technische **Lösung** vorgeschlagen, daß in einem Gehäuse mit Zulauföffnung und Ablauföffnung für die Flüssigkeit oder das Gas wenigstens eine Filterplatte angeordnet ist.

Dies stellt eine technisch einfache Möglichkeit dar, um einen Filter unter Verwendung des zuvor beschriebenen Filtermaterials zu schaffen. Das Gehäuse ist dabei im allgemeinsten Sinne zu verstehen. Es kann sich um ein herkömmliches Gehäuse handeln, aber auch beispielsweise um einen Rohr, durch das die Flüssigkeit oder das Gas hindurchgeleitet wird.

Vorzugsweise ist das Gehäuse wannenförmig ausgebildet und die Filterplatte(n) ist (sind) von oben einsetzbar. Dies stellt eine technisch einfache Möglichkeit zur Schaffung eines Filters dar. Die Grundidee liegt in einem wannenförmigen Gehäuse, welches beispielsweise aus Beton oder Kunststoff bestehen kann. In dieses Gehäuse werden von oben die Filterplatten eingesetzt und können entsprechend auch wieder beispielsweise zu Reinigungszwecken herausgenommen werden oder aber auch dann, wenn die Filterplatten gegen andere Filterplatten mit anderen Durchlässigkeitseigenschaften ausgetauscht werden sollen.

Vorzugsweise weist das Gehäuse einen Abdeckung auf.

Eine weitere Weiterbildung des Gehäuses schlägt vor, daß dieses an seinen beiden Stirnseiten die Zulauföffnung sowie die Ablauföffnung aufweist. Dadurch ist eine technisch einfache Möglichkeit gegeben, um die zu filtrierende Flüssigkeit oder das zu filtrierende Gas dem Filtergehäuse zuzuführen und nach der Reinigung die Flüssigkeit oder das Gas wieder abzuleiten.

Schließlich wird in einer Weiterbildung vorgeschlagen, daß in dem Gehäuse mehrere Filterplatten hintereinander angeordnet sind, wobei in Strömungsrichtung gesehen sich die Körnung des körnigen Materials von Filterplatte zu Filterplatte verringert. Die Grundidee in dieser Ausbildung des Filters liegt darin, daß zunächst die groben Teilchen aus der Flüssigkeit oder aus dem Gas ausgefiltert werden sollen, während die dahinter sich befindenden Filterplatten sukzessive die feineren Bestandteile ausfiltern. Dies bedeutet, daß sich die Filterfeinheit nach hinten hin vergrößert. Dies wird dadurch erreicht, daß die Filterplatten in Strömungsrichtung gesehen eine immer feiner werdende Körnung aufweisen.

Ein Ausführungsbeispiel eines erfindungsgemäßen Filters zum Filtrieren von Flüssigkeiten oder Gasen unter Verwendung des beschriebenen Filtermaterials wird nachfolgend anhand der Zeichnung beschrieben. In dieser zeigt:

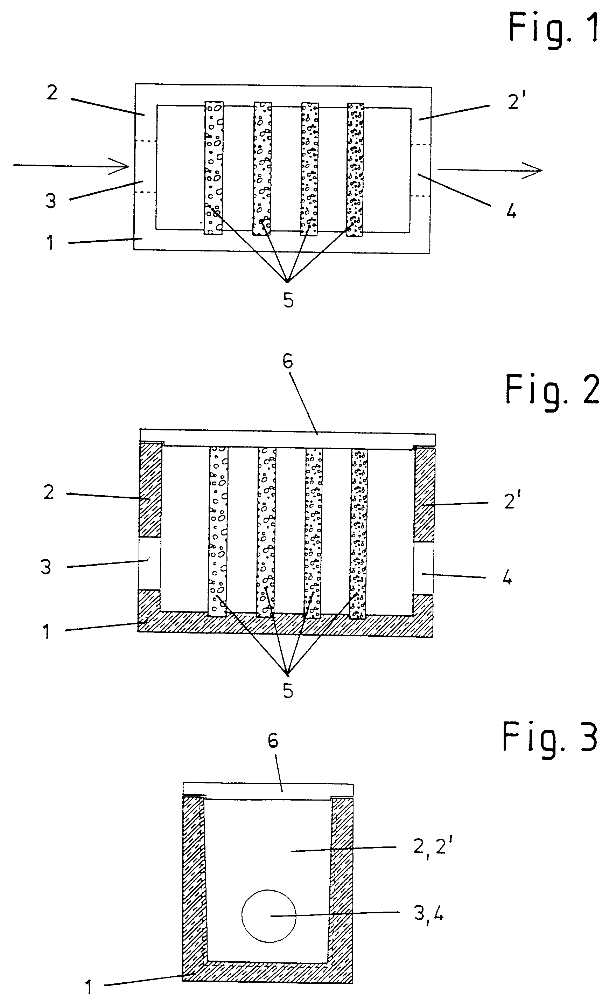

- Fig. 1: eine Draufsicht auf den Filter;
- Fig. 2: einen Längsschnitt durch den Filter in Fig. 1;
- Fig. 3: eine Stirnansicht des Filters der Fig. 1 und 2 sowohl von der einen Seite als auch von der anderen Seite her.

Der Filter besteht aus einem wannenförmigen Gehäuse 1 aus Beton. Gleichermaßen kann das Gehäuse 1 auch aus Kunststoff bestehen. An den beiden Stirnseiten 2, 2' des Gehäuses 1 weist dieses eine Zulauföffnung 3 sowie eine Ablauföffnung 4 für die entsprechende Flüssigkeit oder Gas auf, welches einem Filterprozeß unterzogen werden soll. An diese Zulauföffnung 3 sowie die Ablauföffnung 4 können entsprechende Leitungen oder Rohre angeschlossen sein.

Innerhalb des wannenförmigen Gehäuses 1 befinden sich vier Filterplatten 5. Diese sind von oben in das wannenförmige Gehäuse 1 eingesetzt, welches zu diesem Zweck im Innern entsprechende Aufnahmenuten aufweist. Abgedeckt ist das Gehäuse 1 und damit die Filterplatten 5 durch eine Abdeckung 6.

Die Filterplatten 5 bestehen jeweils aus einem körnigen Material, welches durch ausgehärtetes Epoxidharz zu einer festen Einheit unter Ausbildung von Filterporen verbunden ist. Die in Strömungsrichtung gesehen erste Filterplatte 5 im Bereich der Zulauföffnung 3 weist dabei als körniges Material Splitt mit einer Körnung von 8 bis 11 mm auf. Die dahinter sich befindende zweite Filterplatte 5 besteht ebenfalls aus Splitt mit einer Körnung von 5 bis 8 mm. Die dritte und vierte Filterplatte 5 besteht jeweils aus Quarz mit der Körnung von 2 bis 5 mm bzw. 0,4 bis 2 mm.

Der Filter funktioniert wie folgt:

Die zu filtrierende Flüssigkeit oder das zu filtrierende Gas wird über die Zulauföffnung 3 dem wannenförmigen Gehäuse 1 zugeführt. Die Flüssigkeit bzw. das Gas strömt dabei zunächst durch die die erste Filterplatte 5, wobei die gröbsten Verunreinigungen ausgefiltert werden. Da die Körnung der nachfolgenden Filterplatten 5 immer geringer wird, werden sukzessive von Filterplatte 5 zu Filterplatte 5 die immer feineren Verunreinigungen an der jeweiligen Filterplatte 5 herausgefiltert.

Da sich die Filterplatten 5 im Laufe der Zeit immer mehr mit den Verunreinigungen zusetzen, müssen sie von Zeit zu Zeit gereinigt werden. Zu diesem Zweck werden die Filterplatten 5 aus dem wannenförmigen Gehäuse 1 herausgenommen und der entsprechenden Reinigung unterzogen.

### Bezugszeichenliste

- 1: Gehäuse
- 2, 2': Stirnseite
- 3: Zulauföffnung
- 4: Ablauföffnung
- 5: Filterplatte
- 6: Abdeckung

## Patentansprüche

1. Filtermaterial zum Filtern von Flüssigkeiten oder Gasen,
**gekennzeichnet durch**
ein körniges Material, welches durch einen Verbundstoff zu einer festen Einheit unter Ausbildung von Filterporen verbunden ist.

2. Filtermaterial nach dem vorhergehenden Anspruch,
dadurch gekennzeichnet,
daß das körnige Material aus Splitt und/oder Quarz und/oder Sand besteht.

3. Filtermaterial nach einem der vorhergehenden Ansprüche,
dadurch gekennzeichnet,
daß als Verbundstoff ein Klebstoff, insbesondere Epoxidharz mit Härter, vorgesehen ist.

4. Filter zum Filtrieren von Flüssigkeiten oder Gasen unter Verwendung des Filtermaterials nach einem der Ansprüche 1 bis 3,
**dadurch gekennzeichnet**,
daß in einem Gehäuse (1) mit Zulauföffnung (3) und Ablauföffnung (4) für die Flüssigkeit oder das Gas wenigstens eine Filterplatte (5) angeordnet ist.

5. Filter nach Anspruch 4
dadurch gekennzeichnet,
daß das Gehäuse (1) wannenförmig ausgebildet ist und die Filterplatte(n) (5) von oben eingesetzt ist (sind).

6. Filter nach Anspruch 5
dadurch gekennzeichnet,
daß das Gehäuse (1) eine Abdeckung (6) aufweist.

7. Filter nach einem der Ansprüche 4 bis 6,
dadurch gekennzeichnet,
daß das Gehäuse (1) an seinen beiden Stirnseiten (2,2') die Zulauföffnung (3) sowie die Ablauföffnung (4) aufweist.

8. Filter nach einem der Ansprüche 4 bis 7,
dadurch gekennzeichnet,
daß in dem Gehäuse (1) mehrere Filterplatten (5) hintereinander angeordnet sind, wobei in Strömungsrichtung gesehen sich die Körnung des körnigen Materials von Filterplatte (5) zu Filterplatte (5) verringert.
